(19) Europäisches Patentamt
European Patent Office
Office européen des brevets

(11) EP 1 453 066 B1

(12) **EUROPEAN PATENT SPECIFICATION**

(45) Date of publication and mention of the grant of the patent:
**21.03.2007 Bulletin 2007/12**

(51) Int Cl.:
***G21K 4/00*** *(2006.01)*

(21) Application number: **04100673.5**

(22) Date of filing: **20.02.2004**

(54) **Storage phosphor panel, radiation image sensor and methods of making the same.**

Speicherleuchtstoffträger, Strahlungsbildsensor und Verfahren zu ihren Herstellungen

Panneau d'enregistrement contenant un matériau luminescent, capteur d'image radiographique et procédés de production

(84) Designated Contracting States:
**DE FR GB**

(30) Priority: **26.02.2003 EP 03100472**

(43) Date of publication of application:
**01.09.2004 Bulletin 2004/36**

(73) Proprietor: **AGFA-GEVAERT**
**2640 Mortsel (BE)**

(72) Inventors:
- **Van den Bergh, Rudy,**
**c/o Agfa-Gevaert**
**2640, Mortsel (BE)**
- **Cabes, Tom,**
**c/o Agfa-Gevaert**
**2640, Mortsel (BE)**

(56) References cited:
**EP-A- 0 288 038**
**EP-A- 1 113 458**
**US-A- 5 459 114**
**US-A- 5 466 947**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

FIELD OF THE INVENTION

The present invention relates to a storage (stimulable) phosphor panel suitable for use in medical X-ray radiography, and a method of making them.

BACKGROUND OF THE INVENTION

A well known use of storage phosphors is in the production of X-ray images. In US-A 3,859,527 a method for producing X-ray images with a photostimulable phosphor, which are incorporated in a panel, is disclosed. The panel is exposed to an incident pattern-wise modulated X-ray beam and as a result thereof the phosphor temporarily stores energy contained in the X-ray radiation pattern. At some interval after the exposure, a beam of visible or infra-red light scans the panel in order to stimulate the release of stored energy as light that is detected and converted to sequential electrical signals which become processed in order to produce a visible image. For this purpose the phosphor should store as much as possible of the incident X-ray energy and emit as little as possible of the stored energy before being stimulated by the scanning beam, thus showing prompt emission after X-ray exposure to an extent as low as possible. This is called "digital radiography" or "computed radiography".
Since in the above described X-ray recording systems the X-ray conversion screens are used repeatedly, it is important to provide them with an adequate topcoat for protecting the phosphor containing layer from mechanical and chemical damage. This is particularly important for photostimulable radiographic screens where screens are often transported in a scanning module - wherein the stimulation of the stored energy takes place - while not being encased in a cassette but is used and handled as such without protective encasing.
The image quality that is produced by any radiographic system using phosphor screen thus also in a digital radiographic system, depends largely on the construction of the phosphor screen. Generally, the thinner a phosphor screen at a given amount of absorption of X-rays, the better the image quality will be. This means that the lower the ratio of binder to phosphor of a phosphor screen, the better the image quality, attainable with that screen, will be. Optimum sharpness can thus be obtained when screens without any binder are used. Such screens can be produced, e.g., by physical vapour deposition, which may be thermal vapour deposition, sputtering, electron beam deposition or other of phosphor material on a substrate. However, this production method can not be used in order to produce high quality screens with every arbitrary phosphor available. The mentioned production method leads to the best results when phosphor crystals with high crystal symmetry and simple chemical composition are used.
The use of alkali metal halide phosphors in storage screens or panels is well known in the art of storage phosphor radiology and the high crystal symmetry of these phosphors makes it possible to provide structured screens and binderless screens.
It has been disclosed that when binderless screens with an alkali halide phosphor are produced it is beneficial to have the phosphor crystal deposited as some kind of piles, needles, tiles, etc. to increase the image quality than can be obtained when using such a screen. In, e.g., US-A 4,769,549 it is disclosed that the image quality of a binderless phosphor screen can be improved when the phosphor layer has a block structure shaped in fine pillars. In e.g. US-A 5,055,681 a storage phosphor screen comprising an alkali halide phosphor in a pile-like structure is disclosed. Also in EP-A 1 113 458 a phosphor panel with a vapour deposited CsBr:Eu phosphor layer wherein the phosphor is present as fine needles separated by voids is disclosed for optimising the image quality.
Unfortunately such needle shaped phosphors are quite brittle and the phosphor panels are prone to physical damage after only a few cycles in the scanning apparatus. It has been proposed to strengthen the screens or panels by applying a protective layer on top of the vapour deposited phosphor layer. Such a protective overcoat has been described in EP-A 0 392 474. An intensifying screens having a very useful protective coating of a fluorine-resin and an ologomer, having a polysiloxane structure has been described in EP-A 0 579 016. Also the use of radiation curable coating to form a protective top layer in a X-ray conversion screen has been described e.g. in EP-A 0 209 358, in JP-A 86-176900 and in US-A 4,893,021. For example, the protective layer comprises a UV cured resin composition formed by monomers and/or prepolymers that are polymerised by free-radical polymerisation with the aid of a photoinitiator. The monomeric products are preferably solvents for the prepolymers used. Impregnating storage phosphor layers with a polymer material as, e.g., a thermosetting resin, has been disclosed in EP-A 0 288 038.
In EP-A 1 316 969, a binderless stimulable phosphor screen has been disclosed having a support and a vapour deposited phosphor layer and a protective layer on top of said phosphor layer, characterised in that said vapour deposited phosphor is needle shaped and said phosphor needles have a length, L and voids between them and wherein said protective layer fills said void for at most 0.10 times L. By doing so the strength of the panel is increased, as well as by adding polymeric compounds in order to partially fill the voids as described in EP-A 1 347 460. From other technological fields as e.g. production systems for ceramic products, it has e.g. been learnt that polysilazane-type polymers are advantageously

used while these polymers are impregnating e.g. porous ceramics as has been disclosed in US-A 5,459,114; thereby increasing mechanical strength in ceramic products.
With respect to image quality it has been disclosed in US-A 4,947,046 that the voids between needle phosphors can be filled with colorants, dyes and/or pigments, thus enhancing the said image quality.
Stimulable or storage phosphor materials such as alkali metal halide phosphors are known to be highly moisture sensitive: absorption of moisture in the surrounding air thereby deteriorates characteristics of the phosphor, and moreover, resolution or image definition. Therefor a moisture-resistant barrier impermeable to water is highly desired on the upper side of the phosphor layer in order to protect the phosphor against moisture (and physical damage) as has e.g. been disclosed in US-A 5,466,947 for a stimulable phosphor having a plasma protective thin parylene polymer coating in order not to suppress sensitivity of the phosphor panel for weak radioactive labels. In a radiation detecting apparatus comprising such a moisture sensitive phosphor layer, present on an imaging device or a fiber optical plate or FOP, known as an optical part constituted by a plurality of optical fibers bundled together so that the radiation incident thereon from the phosphor layer side is converted into light to be detected after stimulation of storage phosphor, protection of phosphor particles and the layer wherein the said particles are present is highly desired, more particular from the point of view of image definition.

## OBJECTS AND SUMMARY OF THE INVENTION

It is an object of the present invention to provide a stimulable phosphor screen useful in an X-ray recording system resistant to moisture in order to avoid loss in image quality.
More in particular it is an object of the present invention to provide a binderless stimulable phosphor screen useful for same purposes, wherein said screen is resistant to moisture in order to avoid loss in image quality.
The above mentioned object is realised by providing a stimulable phosphor screen having the specific features defined in claim 1. Specific features for preferred embodiments of the invention are disclosed in the dependent claims.
Further advantages and embodiments of the present invention will become apparent from the following description.

## DETAILED DESCRIPTION OF THE INVENTION

It has been found that in a storage phosphor panel, and, more particularly, in a binderless stimulable phosphor screen comprising a radiation-transparent substrate and a needle-shaped stimulable phosphor layer formed on said substrate, adequate protection of the said stimulable phosphor screen or panel against environmental air moisture is obtained by providing a first transparent organic film covering said stimulable phosphor layer, and a second outermost transparent film formed on said first transparent organic film, wherein presence as a second transparent film of a silazane or siloxazane type polymer film is particularly suitable. In a preferred embodiment according to the present invention said second transparent film is a polymeric film containing polymers selected from the group consisting of silazane and siloxazane type polymers, mixtures thereof and mixtures of said silazane or siloxazane type polymers with compatible film-forming polymers.
Siloxazane polymer types, useful therefore have been known since quite a lot of time: so e.g. in US-A 3,271,361 a process for making ordered siloxazane polymers has been described, whereas in GB-A 1,084,659 improvements in or related with organosilicon polymers have been disclosed. Much more recently PCT-filing WO87/05298 has been describing polysilazanes and related compositions, processes and uses. That invention also relates to the use of polysiloxazanes and polyhydridosiloxanes as ceramic precursors. The hardness, strength, structural stability under extreme environmental conditions of those compounds is said to be well-known. Controll of the polysilazane molecular weight, structural composition and viscoelastic properties play a considerable role in determining the tractability (solubility, meltability or malleability) of the polymer, the ceramic yield, and the selectivity for specific ceramic products. In particular, the tractability plays a major role in how useful the polymer is as a binder, or for forming shapes, coatings, spinning fibers and the like. The more cross-linked a polymer is, the less control one has of its viscoelastic properties. Thus, highly cross-linked and low molecular weight polymers are not particularly useful for spinning fibers because the spun preceramic fiber often lacks tensile strength and is therefore unable to support its own weight. By contrast, high molecular weight, substantially linear polymers as provided therein are extremely important. Such polymers represent a significant advance in the art, as they provide chain entanglement interactions in the fiber-spinning process and thus enhance the overall tensile strength of the spun fibers. "Silazanes" are compounds which contain one or more silicon-nitrogen bonds, whereas "polysilazanes" are intended to include oligomeric and polymeric silazanes, i.e. compounds which include two or more monomeric silazane units. "Siloxazanes" are compounds which contain the unit [O--Si--N] and the term "polysiloxazane" is intended to include oligomeric and polymeric siloxazanes, i.e. compounds which include two or more monomeric siloxazane units. Ceramic materials are thus provided as being useful in a number of applications, including as coatings for many different kinds of substrates. Silicon nitride and silicon oxynitride coatings may be provided on a

substrate, for example, by a variation of the pyrolysis method just described. A substrate selected such that it will withstand the high temperatures of pyrolysis (e.g., metal, glass, ceramic, fibers, graphite) is coated with a preceramic polymer material by dipping in a selected silazane or siloxazane polymer solution, or by painting, spraying, or the like, with such polymer solution, the solution having a predetermined concentration, preferably between about 0.1 and 100 wt.%, more preferably between about 5 and 10 wt.% for most applications. The liquid or dissolved polymer may be admixed with ceramic powders such as silicon nitride or silicon carbide optionally admixed with sintering aids such as aluminum oxide, silica, yttrium oxide, and the like, prior to coating. Cross-linking agents may be included in the coating mixture as well, as e.g. siloxane oligomers or polymers such as $[CH_3SiHO]_x$ can be reacted with ammonia or amine to introduce nitrogen moieties into these species. These reactions may lead to the formation of a nitrogen cross-linked polymer having a homogeneous distribution of Si--O and Si--N bonds in the polymer. The siloxazane so provided may be pyrolysed under an inert gas such as nitrogen or argon, or under ammonia or a gaseous amine compound, to yield ceramic mixtures containing silicon oxynitride. Alternatively, nitrogen-free siloxane starting materials which may be oligomeric or polymeric are pyrolyzed under ammonia or a gaseous amine atmosphere to give silicon oxynitride directly. In this case, the nitrogen is introduced into the siloxane during rather than prior to pyrolysis. The siloxane may be a sesquisiloxane, a polyhydridosiloxane, a cross-linked polysiloxane or a polysiloxane with latent reactive groups such as hydrogen amine, alkoxy, sulfide, alkenyl, alkynyl, etc., which can be cross-linked during heating or replaced during curing. The procedure described in the cited PCT-filing for producing coatings containing silicon nitride can be done with a conventional furnace.

Further, the method leads to heat-stable, wear-, erosion-, abrasion, and corrosion-resistant silicon nitride ceramic coatings. Because silicon nitride is an extremely hard, durable material, many applications of the coating process are possible. Preceramic polymers as provided, admixed with ceramic powders, may be used to form three-dimensional articles by injection- or compression-molding. Preceramic polymer/ceramic powder system is advantageously used to form three-dimensional bodies by compression molding.

In another application substantially linear high molecular polysilazanes in particular, can be used for preceramic fiber spinning. Infiltration and impregnation processes are further possibilities, as discussed, e.g., in US-A 4,177,230 and in W. S. Coblenz et al. in "Emergent Process Methods for High-Technology Ceramics", Ed. Davis et al. (Plenum Publishing, 1984). Two general methods are typically used. One is a high-vacuum technique in which a porous ceramic body is contacted under vacuum with a liquid or dissolved preceramic polymer. After a high vacuum infiltration, the article is pyrolyzed to achieve a higher density. The second method is high-pressure infiltration. In addition, low molecular weight oligosilazane solutions having higher mobility in the porous ceramic body can be incubated with the ceramic body and a transition metal catalyst, followed by curing of the oligomeric reactants. In situ chain extension or cross-linking will reduce the mobility and volatility of the oligomeric starting materials.

As has been set forth in US-A 5,459,114 polysilazane, prepared therein like for example, an inorganic polysilazane, an inorganic polysiloxazane, a polyorgano(hydro)silazane, a modified polysilazane or a polymetallosilazane, by performing chemical vapour deposition (CVD) coating before or after said process of impregnation, curing and firing, makes delamination of fibers to be minimized.

Novel polysiloxazanes comprising $[(SiH_2)_n NH]$ and $[(SiH_2)_m O]$ as the main repeating units are provided in US-A 4,869,858, wherein it was an object to provide a simple process for producing continuous silicon oxynitride fibers. The polysiloxazanes are produced by reacting a dihalosilane or an adduct thereof with a Lewis base, with ammonia and water vapor or oxygen. From the polysiloxazane, novel silicon oxynitride shapes can be produced and the silicon oxynitride shapes are essentially composed of silicon, nitride (5 mol % or more) and oxygen (5 mol % or more).

More recently in US-A 6,210,786 a fiber-reinforced ceramic matrix composite (FRCMC) structure having tailored physical properties has been provided, with a polymer-derived ceramic resin in its ceramic form and with fibers in a sufficient quantity incorporated within the ceramic resin, in order to produce a desired degree of ductility exhibited by the structure, wherein the degree of ductility exhibited varies with the percentage by volume of the fibers, with said fibers having thereon an interface coating different from the composite and residing on the fibers between the fibers and the composite.

As has been disclosed even more recently in US-A 6,368,663 there is provided a ceramic-based composite member comprising a dense matrix formed on a surface of a shaped fabric, and a matrix having fine cracks formed in a gap of the matrix. In the structure, since the binding force of the ceramic fiber by the matrix having fine cracks is weak, a kind of soft structure is formed, Young's modulus is lowered, the thermal stress is reduced, and the resistance to thermal shock is enhanced. Moreover, according to that invention, there is provided a method of manufacturing a ceramic-based composite member, in which after CVI (Chemical Vapour Infiltration) treatment is performed to form an SiC matrix on a surface of a shaped fabric, PIP (Polymer Impregnation and Pyrolysis) treatment is performed to infiltrate a gap of the dense matrix with an organic silicon polymer as a base before performing pyrolysis. The method of that invention is a process (hereinafter referred to as the hybrid treatment) constituted by combining CVI and PIP treatments, a dense matrix is formed around a ceramic fiber by CVI treatment, and the gap is infiltrated/filled with the matrix by the PIP treatment. Additionally, the matrix formed by the hybrid treatment is called the hybrid matrix. The PIP (Polymer Impregnation and Pyrolysis) treatment has a faster matrix forming rate as compared with CVI treatment, and can repeatedly be performed in a short time. Therefore, by repeating the PIP treatment, the gap after the CVI treatment is filled well, and the hermetic properties can be enhanced.

Providing a carbon/carbon composite comprising crystalline silicon carbide which is essentially uniformly distributed on both internal and external surfaces of the composite in a low concentration, as well as a process for producing the composite and the use of the composite has been described in US-A 6,376,431; wherein it has been discovered that small amounts of crystalline silicon carbide uniformly distributed throughout the carbon/carbon composite results in reduced wear with either no change or a slight increase in the friction coefficient.

The phosphor layer generally comprises a binder and a stimulable phosphor dispersed therein. However, there is also known a phosphor layer comprising agglomerate of a stimulable phosphor without binder. The phosphor layer containing no binder can be formed by deposition process or firing process. Further, there is known a phosphor layer comprising agglomerate of a stimulable phosphor impregnated with a polymer material. A radiation image storage panel having any of the above phosphor layers can be used for the radiation image recording and reproducing method.

The phosphor layer can be formed by coating a dispersion containing phosphor particles and a binder polymer in a proper organic solvent. In the coating dispersion, the binder polymer and the stimulable phosphor particles are contained generally in a ratio in the range of 1:1 to 1:100 (binder:phosphor, expressed by weight), preferably 1:8 to 1:50 (by weight). As the binder polymer, a variety of resins are known and are employable for the present invention. The dispersion may be coated on the permanent support to directly form the phosphor layer. Otherwise, it may coated on a temporary support to form a sheet for the phosphor layer, and then the formed sheet is peeled from the temporary support and stuck on the permanent support. In that case, the sheet for the phosphor layer may be pressed under heating in the known manner. The thickness and the material of the support are also known and they can be optionally determined. Auxiliary layers such as a subbing layer and a light-reflecting layer may be provided on the support. The thickness of the phosphor layer is generally in the range of 20 $\mu$m to 1 mm, preferably 50 to 500 $\mu$m. The procedure comprising the steps of peeling the protective film from the continuous multi-layer sheet (comprising a coated, e.g. fluororesin, layer, transparent resin film, adhesive layer, and protective layer) and sticking the multi-layer sheet on the phosphor sheet can be carried out in the system wherein the continuous multi-layer sheet is wound around a roll. Immediately after the continuous sheet is drown out from the roll, the protective film is peeled off by means of the separator rolls and then a continuous sheet becomes superposed on the phosphor sheet so that the bared surface may be in contact with the surface of the phosphor layer. Subsequently, the continuous multi-layer sheet and phosphor sheet are passed together through the laminate rolls so that both sheets are fixed to each other. In the case that the protective film is also provided on the coated layer, the film is peeled off after the above laminating step. In the above described continuous multi-layer sheet preparation method, comprising adhesive layer, transparent resin film layer and coated resin layer provided, in this order, on the phosphor layer of phosphor sheet, the multi-layer sheet is cut into pieces of the predetermined size to give the desired radiation image storage panel.

In case of a binderless phosphor layer and preparation of the said layer by "vapour deposited phosphor" it is further, throughout this text, meant that a phosphor is deposited on a substrate by any method selected from the group consisting of thermal vapour deposition, chemical vapour deposition, electron beam deposition, radio frequency deposition and pulsed laser deposition. This vapour deposition is preferably carried out under conditions as described in EP-A-1 113 458. When vapour deposited phosphor layers contain phosphor needles separated by voids as disclosed in, e.g., EP-A-1 113 458, the phosphor layer is, as said above, quite sensitive for environmental moisture.

It has been found now that, according to the present invention the stimulable phosphor screen, covered above a first transparent organic film layer with a second transparent silazane or siloxazane type polymeric film formed on said first transparent organic film, provides an excellent and efficient protection of the screen or panel against moisture present in the environment. Said second transparent film as a polymeric film thus contains polymers selected from the group consisting of silazane and siloxazane type polymers, mixtures thereof and mixtures of said silazane or siloxazane type polymers with compatible film-forming polymers.

The selected silazane or siloxazane type polymeric compounds can be dissolved in any suitable solvent, e.g., alcohols such as methanol, ethanol, n-propanol, methoxypropanol and n-butanol; chlorinated hydrocarbons such as methylene chloride and ethylene chloride; ketones such as acetone, butanone, methyl ethyl ketone, diethyl ketone and methyl isobutyl ketone; esters of alcohols with aliphatic acids such as methyl acetate, ethyl acetate and butyl acetate; ethers such as dioxane, ethylene glycol monoethylether; methyl glycol; aromatic hydrocarbons such as toluene and mixtures of the above-mentioned solvents.

The storage phosphor in a binderless storage phosphor screen according to the present invention may be any storage phosphor known in the art. Preferably the storage phosphor in such a binderless storage phosphor screen is an alkali metal phosphor.

Suitable phosphors are, e.g., phosphors according to formula I:

$$M^{1+}X.aM^{2+}X'_2bM^{3+}X''_3:cZ$$

wherein:

$M^{1+}$ is at least one member selected from the group consisting of Li, Na, K, Cs and Rb,
$M^{2+}$ is at least one member selected from the group consisting of Be, Mg, Ca, Sr, Ba, Zn, Cd, Cu, Pb and Ni,
$M^{3+}$ is at least one member selected from the group consisting of Sc, Y, La, Ce, Pr, Nd, Pm, Sm, Eu, Gd, Tb, Dy, Ho, Er, Tm, Yb, Lu, Al, Bi, In and Ga,
Z is at least one member selected from the group $Ga^{1+}$, $Ge^{2+}$, $Sn^{2+}$, $Sb^{3+}$ and $As^{3+}$,
X, X' and X" can be the same or different and each represents a halogen atom selected from the group consisting of F, Br, Cl, I and $0 \leq a \leq 1$, $0 \leq b \leq 1$ and $0 < c \leq 0.2$.

Such phosphors have been disclosed, e.g., in US-A-5 736 069.

Highly preferred storage phosphors for use in a binderless phosphor screen of the present invention are CsX:Eu stimulable phosphors, wherein X represents a halide selected from the group consisting of Br and Cl and combinations thereof prepared by a method comprising the steps of

- mixing said CsX with between $10^{-3}$ and 5 mol % of a Europium compound selected from the group consisting of $EuX'_2$, $EuX'_3$ and EuOX', X' being a member selected from the group consisting of F, Cl, Br and I,
- firing said mixture at a temperature above 450 °C
- cooling said mixture and
- recovering the CsX:Eu phosphor.

In a most preferred embodiment according to the present invention in the stimulable phoshor screen or panel the said phosphor is a needle-shaped vapour-deposited CsBr:Eu phosphor. As the phosphor screen comprises a vapour deposited CsBr:Eu needle phosphor it is preferred to use polymers that do not carry hydrophilic, moisture attracting substituents. The selected silazane or siloxazane type polymeric compounds for use as an outermost film onto the phosphor screen with a vapour deposited CsBr:Eu needle phosphor are preferably dissolved in a solvent that can easily be kept water free, wherein by water free is understood a solvent that has less than 1 % wt/wt of water.

It is further not excluded to additionally bring a silazane or siloxazane type polymeric compound in the voids between the needle phosphors in a vapour deposited phosphor screen of the present invention before applying a protective layer on top of the phosphor layer. So a solution having a viscosity in order to provoke seeping of the coating solution into the voids between the phosphor needles may be applied in that case. When filling the voids it is thus preferred that the viscosity of the coating solution is adapted so that, with phosphor needles having a length, L , said protective layer fills said void for at most 0.10 times L or 10 % of L. When the voids are filled deeper ease of recycling the phosphor is questionable. It has been found now that by adjusting the viscosity of the protective layer so that, with phosphor needles having a length, L , filling said voids for at most 0.10 times L, is a most acceptable compromise between strength of the phosphor layer and ease of recycling or recuperation of the phosphor is achievable.

Although the image quality that can be obtained in computed radiography when using a stimulable phosphor panel of the present invention having needle shaped phosphor is very high, it has been found that the image quality is further enhanced when the voids between the phosphor needles moreover contain a colorant, i.a., a dye or pigment that absorbs light of the stimulating wavelength. A further improvement has been realised when the voids are containing a colorant absorbing the stimulating radiation together with a colorant reflecting the light emitted by the stimulable phosphor upon stimulation. When an alkali metal phosphor is used in the panel according to the present invention, then the stimulating light is either red or infrared light and then the colorant is preferably a blue colorant. As the colorant, either an organic colorant or an inorganic colorant can be employed. So an organic colorant having a body colour ranging from blue to green suitable for use in the radiation image storage panel of the present invention includes ZAPON FAST BLUE 3G (manufactured by Hoechst AG.), ESTROL BRILL BLUE N-3RL (manufactured by Sumitomo Kagaku Co., Ltd.), SUMIACRYL BLUE F-GSL (manufactured by Sumitomo Kagaku Co., Ltd.), D & C BLUE No. 1 (manufactured by National Aniline Co., Ltd.), SPIRIT BLUE (manufactured by Hodogaya Kagaku Co., Ltd.), OIL BLUE No. 603 (manufactured by Orient Co., Ltd.), KITON BLUE A (manufactured by Ciba Geigy AG.), AIZEN CATHILON BLUE GLH (manufactured by Hodogaya Kagaku Co., Ltd.), LAKE BLUE A.F.H. (manufactured by Kyowa Sangyo Co., Ltd.), RODALIN BLUE 6GX (manufactured by Kyowa Sangyo Co., Ltd.), PRIMOCYANINE 6GX (manufactured by Inahata Sangyo Co., Ltd.), BRILLACID GREEN 6BH (manufactured by Hodogaya Kagaku Co., Ltd.), CYANINE BLUE BNRS (manufactured by Toyo Ink Co., Ltd.), LIONOL BLUE SL (manufactured by Toyo Ink Co., Ltd.), and the like. E.g., an inorganic colorant having a body colour ranging from blue to green which is advantageously employed in the radiation image storage panel of the

present invention includes ultramarine blue, cobalt blue, cerulean blue. Other useful colorants are the blue colorants sold by BASF AG of Germany under the trade name HELIOGEN BLUE and those sold by Bayer AG of Germany under trade name MACROLEX BLUE.

The colorant, contained in the voids of a panel of the present invention, intended for reflecting the emitted light, preferably is a white pigment. Very suitable white pigments are, e.g., $TiO_2$, ZnS, $Al_2O_3$, MgO, and $BaSO_4$, without however being limited thereto. $TiO_2$ in its anatase crystal form is a preferred white pigment for use in a panel of the present invention.

The colorant(s) can be brought in the voids either before adding e.g. silazane or siloxazane type polymeric compound, as described hereinbefore, or together with the said silazane or siloxazane type polymeric compounds. When the colorant is brought into the voids before the polymeric compound, then the compound can be introduced into the fine gaps whose width is preferably 1-30 μm. The substance of fine particles having a diameter of several hundred nanometers may be introduced physically without previous processing. When the substance has a lower melting point, it may be heated and introduced. The substance may be permeated into the gap when dissolved or dispersed in a liquid having suitable viscosity and is deposited by evaporation or modification by heating. The substance may be introduced into the gap by a gas phase deposition method. In the latter case a suitable pigment can be a dye as used in thermal dye sublimation transfer. Typical and specific examples of dyes for use in thermal dye sublimation transfer have been described e.g. in EP-A's 0 209 990, 0 209 991, 0 216 483, 0 218 397, 0 227 095, 0 227 096, 0 229 374, 0 235 939, 0 247 737, 0 257 577, 0 257 580, 0 258 856, 0 400 706, 0 279 330, 0 279 467 and 0 285 665, US-A-4 743 582, US-A-4 753 922, US-A-4 753 923, US-A-4 757 046, in US-A's 4,769,360; 4,771,035 and 5,026,677; in JP-A's 84/78894, 84/78895, 84/78896, 84/227490, 84/227948, 85/27594, 85/30391, 85/229787, 85/229789, 85/229790, 85/229791, 85/229792, 85/229793, 85/229795, 86/41596, 86/268493, 86/268494, 86/268495 and JP-A-86/284 489. When the colorants are not introduced by gas phase deposition in the voids between the phosphor needles, then colorants can, for application in the voids of a phosphor panel of the present invention, be dissolved or dispersed in any suitable solvent. Hereinafter the term "solution(s) of a colorant" is used to include both solution and dispersions. Examples of suitable solvents are, e.g., lower alcohols such as methanol, ethanol, n-propanol and n-butanol; chlorinated hydrocarbons such as methylene chloride and ethylene chloride; ketones such as acetone, butanone, methyl ethyl ketone and methyl isobutyl ketone; esters of lower alcohols with lower aliphatic acids such as methyl acetate, ethyl acetate and butyl acetate; ethers such as dioxane, ethylene glycol monoethyl ether; methyl glycol; and mixtures of the above-mentioned solvents. When the phosphor screen comprises the preferred vapour deposited CsBr:Eu needle-shaped phosphor, it is preferred to use solvents that can easily be kept water free as already suggested hereinbefore. The expression "water free" means that a solvent that less than 1 % wt/wt of water. Therefore esters of lower alcohols with lower aliphatic acids such as methyl acetate, ethyl acetate and butyl acetate and toluene are preferred solvents.

When the colorants are dispersed in the solution it is preferred that the average particle size of the colorant is adapted to the width of the voids. It is known from US-A 4,947,046, that the voids between phosphor needles are e.g. between 0.01 μm and 30 μm.

In a preferred embodiment of the present invention, the polymeric solution for filling the voids further contains one or more colorant(s) so that in one step both the elasticity of the screen and the image quality can be increased by adding simultaneously a polymer and at least one colorant in the voids.

The stimulable phosphor screen according to the present invention thus comprises a radiation-transparent substrate; a (preferably needle-shaped) stimulable phosphor layer formed on said substrate; a first transparent organic film covering said stimulable phosphor layer; and a second transparent film formed on said first transparent organic film, characterised in that said second transparent film is a polymeric film containing polymers selected from the group consisting of silazane and siloxazane type polymers, mixtures thereof and mixtures of said silazane or siloxazane type polymers with compatible film-forming polymers.

In another embodiment said stimulable phosphor screen according to the present invention further comprises an intermediate transparent organic film between said substrate and said stimulable phosphor layer.

In a preferred embodiment according to the present invention said organic film, whether being present alone as first organic film, whether present as an intermediate layer together with that first organic film in the layer arrangement of the stimulable phosphor screen, is a "parylene" film, i.e. a poly-paraxylylene film.

Preferred polymers for use as organic "parylene" film are poly(p-xylylene), poly(p-2-chloroxylylene), poly(p-2,6-dichloroxylylene) and fluoro substituted poly(p-xylylene). Most preferred polymers for use in the protective layer of this invention are vacuum deposited, preferably chemical vacuum deposited poly-p-xylylene film. A poly-p-xylylene has repeating units in the range from 10 to 10000, wherein each repeating unit has an aromatic nuclear group, whether or not substituted. Each substituent group, if present, can be the same or different and can be any inert organic or inorganic group which can normally be substituted on aromatic nuclei. Illustrations of such substituent groups are alkyl, aryl, alkenyl, amino, cyano, carboxyl, alkoxy, hydroxylalkyl, carbalkoxy and similar groups as well as inorganic ions such as hydroxyl, nitro, halogen and other similar groups which are normally substitutable on aromatic nuclei. Particularly preferred substituted groups are those simple hydrocarbon groups such as the lower alkyl groups such as methyl, ethyl, propyl,

butyl, hexyl and halogen groups particularly chlorine, bromine, iodine and fluorine as well as the cyano group and hydrogen.

As a basic agent the commercially available di-p-xylylene composition sold by the Union Carbide Co. under the trademark "PARYLENE" is thus preferred. The preferred compositions for the protective moistureproof protective layer covering the phosphor screens or panels thus are the unsubstituted "PARYLENE N", the monochlorine substituted "PARYLENE C", the dichlorine substituted "PARYLENE D" and the "PARYLENE HT" (a completely fluorine substituted version of PARYLENE N, opposite to the other "parylenes" resistant to heat up to a temperature of 400°C and also resistant to ultra-violet radiation, moisture resistance being about the same as the moisture resistance of "PARYLENE C": see the note about "High Performance Coating for Electronics Resist Hydrocarbons and High Temperature" written by Guy Hall, Specialty Coating Systems, Indianapolis, available via www.scscookson.com. Technology Letters have also been made available by Specialty Coating Systems, a Cookson Company, as e.g. the one about "Solvent Resistance of the parylenes", wherein the effect of a wide variety of organic solvents on parylenes N, C, and D was investigated.

Most preferred polymers for use in the preparation of the organic polymer film layer as set forth hereinbefore are poly(p-2-chloroxylylene), i.e. PARYLENE C film, poly(p-2,6-dichloroxylylene), i.e. PARYLENE D film and "PARYLENE HT" (a completely fluorine substituted version of PARYLENE N.

Parylene is available from a variety of sources and is commonly used for protecting printed circuit boards, sensors, and other electronic and electrical devices. Although the specific manner in which the parylene is applied as a layer covering the the phosphor layer or, moreover as intermediate layer between radiation-transparent substrate and phosphor layer forms no part of the present invention, it is preferred to apply the parylene layer by chemical vapour deposition (CVD). A method for doing so is disclosed in EP-A 1 286 364. The process of deposition basically proceeds as follows :

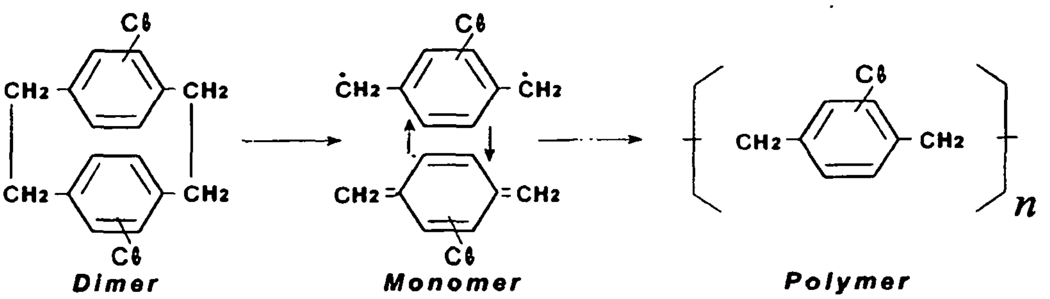

A suitable dimer, - e.g., (cyclo-di(p-xylene) for the deposition of PARYLENE N, cyclo-di(p-2-chloroxylene) for the deposition of PARYLENE C or cyclo-di(p-2,6-dichloroxylene) for the deposition of PARYLENE D), - is heated and decomposes in two radicals. These radicals are deposited on the phosphor layer where they polymerise and form a polymeric layer. The chemical vapour deposition of the parylene layer (either PARYLENE N, C or D) has several advantages as the layer is deposited without pinholes and as the barrier layer is not only deposited on the main surface of the phosphor layer, but also on the edges so that the sealing of the phosphor layer is complete.

Preferably the parylene layer(s) have a thickness in the range between 0.05 μm and 15 μm, more preferably between 1 μm and 10 μm.

According to the present invention the stimulable phosphor screen has, as a radiation-transparent substrate, an aluminum or an amorphous carbon (a-C) substrate. Such an aluminum or an amorphous carbon film substrate, preferably present onto a polymeric support opens perspectives in order to produce a binderless storage phosphor screen on a support with low X-ray absorption, even if the storage phosphor layer is applied by vacuum deposition at fairly high temperatures. Amorphous carbon (a-C) films suitable for use in this invention are commercially available through, e.g., Tokay Carbon Co, LTD of Tokyo, Japan or Nisshinbo Industries, Inc of Tokyo, Japan, where they are termed "Glass-Like Carbon Film", or "Glassy Carbon".

In a binderless phosphor panel or screen according to the present invention, the thickness of the amorphous carbon layer may range from 100 μm up to 3000 μm, a thickness between 500 μm and 2000 μm being preferred as compromise between flexibility, strength and X-ray absorption.

The need for very high mechanical strength as is especially desired in the radiographic systems wherein use is made of a storage phosphor panel wherein during reading of the energy stored in the panel, the panel is automatically removed from the cassette, moved through a reader, often via a sinuous path, and then put back in the cassette. In such a reader it is quite advantageous to make use of a screen or panel with an auxiliary layer laminated on the amorphous carbon layer or aluminum layer: this auxiliary polymer support layer can be any polymeric film known in the art, e.g. polyester film, polyvinylchloride, polycarbonate, syntactic polystyrene, etc.. Preferred polymeric films are polyester ester

films, as e.g., polyethylene terephthalate films, polyethylene naphthalate films, etc.. The thickness of the auxiliary layer may range from 1 μm to 500 μm. It is possible to use a fairly thin amorphous carbon film, e.g., 400 μm and laminate a 500 μm thick polymeric film to it as well as to use a thick amorphous carbon film, e.g., 2000 μm thick with a thin, e.g., 6 μm thick, polymeric film laminated onto it. The relative thickness of the amorphous carbon or aluminum layer on one hand, and the polymeric support film at the other hand, may be varied widely and is only directed by the required physical strength of the amorphous carbon or aluminum during deposition of the phosphor layer and the required flexibility during use of the panel.

Presence of a radiation-transparent substrate, optionally coated with a moisture-resistant parylene layer, a binderless storage phosphor layer formed thereupon (preferably being a binderless needle-shaped, vapour-deposited CsBr:Eu phosphor in the stimulable phosphor screen according to the present invention), a first transparent organic film, preferably a moisture-resistant parylene layer covering over the storage phosphor layer, and a transparent inorganic film formed on the first transparent organic film, wherein said second transparent film is a silazane or siloxazane type polymeric film provides a remarkably improved protection against moisture from environmental air to the screen or panel.

The radiation image storage panel of the present invention is thus, in a preferred embodiment, characterized in that it comprises a radiation-transparent substrate (wherein radiation transparency is particularly desired for mammographic applications), a binderless needle-shaped storage phosphor formed on the substrate, optionally with an intermediate layer between substrate and phosphor layer, a first transparent organic film (preferably a "parylene" layer, preferably - not being limited thereto - having the same composition as the intermediate layer - if said intermediate layer is present), covering over the storage phosphor layer, a transparent inorganic film of polysilazanes or polysiloxazanes formed on the first transparent organic film, and an imaging device disposed in order to face the storage phosphor screen. Such a layer arrangement as disclosed above effectively provides an excellent moisture resistance and scratch resistance of the normally moisture-sensitive and scratch-sensitive phosphor layer, and, as a consequence preserves image quality in an efficient way.

A radiation image sensor of the present invention thus comprises a stimulable phosphor screen as described before, and an imaging device disposed in order to face said stimulable phosphor screen. In a preferred embodiment according to the present invention a radiation image sensor comprises a stimulable phosphor screen and an imaging device disposed in order to face said stimulable phosphor screen. According to the present invention, in a preferred embodiment thereof, said imaging device is a CCD.

The method of producing or preparing such a storage phosphor panel of the present invention is further characterized in that it comprises steps of forming a binderless needle-shaped, vapour-deposited CsBr:Eu phosphor layer on a radiation-transparent substrate, forming a first transparent organic film covering over the storage phosphor layer, and forming a transparent inorganic film on the first transparent organic film. Optionally an intermediate film, preferably having the same composition as the first transparent organic film, in order to produce a radiation image storage screen or panel in which the moisture resistance of the phosphor layer is remarkably improved. It is clear that the layers as defined herein are, in a preferred embodiment the same preferred layers as described before.

According to the present invention a method of preparing or manufacturing a stimulable phosphor screen or panel is further offered, wherein said screen is characterised by the specific features as disclosed hereinbefore, said method comprising the steps of:

- forming a stimulable phosphor layer on a radiation-transparent substrate;
- forming a first transparent organic film covering over said needle-shaped stimulable phosphor layer; and
- forming a second transparent film formed on said first transparent organic film, wherein said second transparent film is a polymeric film containing polymers selected from the group consisting of silazane and siloxazane type polymers, mixtures thereof and mixtures of said silazane or siloxazane type polymers with compatible film-forming polymers.

In a preferred embodiment of the manufacturing methods disclosed above said organic film is a poly-paraxylylene film.

The method of producing a radiation image storage panel according to the present invention, in a particular embodiment, is characterised in that it comprises the steps of forming the (preferably vapour deposited needle-shaped) storage phosphor layer on a radiation-transparent substrate, whether or not covered with a transparent organic film (preferably a parylene film), forming a first transparent organic film (also having parylene composition) covering over the storage phosphor panel and forming a transparent inorganic film on the first transparent organic film characterised in that said second transparent film is a silazane or siloxazane type polymeric film; further disposing an imaging device opposite the storage phosphor layer.

Since the transparent inorganic film is formed on the first transparent organic film, the present invention provides manufacturing of a radiation image sensor in which the moisture resistance of storage phosphor panel is remarkably improved.

According to the present invention a method of preparing a stimulable phosphor screen or panel is provided, said method comprising the steps of:

- forming a needle-shaped stimulable phosphor layer on a radiation-transparent substrate;
- forming a first transparent organic film covering over said needle-shaped stimulable phosphor layer; and
- forming a transparent inorganic film on said first transparent organic film, wherein said second transparent inorganic film is a silazane or siloxazane type polymeric film.

The invention further encompasses a method for producing a binderless needle-shaped stimulable phosphor layer on a radiation-transparent substrate, wherein said method comprises the steps of :

- vapour depositing a photostimulable phosphor on a substrate forming a phosphor layer with phosphor needles and voids between them,
- applying a solution of a polymer on said vapour deposited phosphor,
- optionally wiping (not required in case of dip-coating, spray-coating, bar-coating and sieve coating) the excess of said solution from said phosphor layer and
- drying the phosphor screen.

The invention also encompasses a method for producing a binderless needle-shaped stimulable phosphor layer on a radiation-transparent substrate containing a CsX:Eu stimulable phosphor, wherein X represents a halide selected from the group consisting of Br, Cl and combinations thereof comprising the steps of :

- bringing multiple heatable containers of CsX and a Europium compound selected from the group consisting of $EuX'_2$ $EuX'_3$ and EuOX', X' being selected from the group consisting of F, Cl, Br, I and combinations thereof together with the substrate in a deposition chamber that is evacuated to at least $10^{-1}$ mbar,
- depositing, by a method selected from the group consisting of physical vapour deposition, chemical vapour deposition or atomisation technique, both said CsX and said Europium compound on a substrate in such a ratio that on said substrate a CsX phosphor, doped with between $10^{-3}$ and 5 mol % of Europium, is formed
- applying a solution of a silazane or siloxazane type polymeric compound on said vapour deposited phosphor, and
- drying the phosphor screen.

The present invention further, more particularly, encompasses a method for producing a binderless needle-shaped stimulable phosphor layer on a radiation-transparent substrate, said phosphor layer containing a CsX:Eu stimulable phosphor, wherein the method comprises the steps of :

- bringing a heatable container with a CsX:Eu phosphor, X being selected from the group consisting of Cl, Br and combinations thereof together with the substrate in a deposition chamber that is evacuated to at least $10^{-1}$ mbar,
- depositing, by a method selected from the group consisting of physical vapour deposition, chemical vapour deposition or atomisation technique, said CsX:Eu phosphor forming a vapour deposited phosphor layer with needle shaped phosphor,
- applying a solution of a silazane or siloxazane type polymeric compound on said vapour deposited phosphor, and
- drying the phosphor screen.

The storage phosphor panel according to the present invention may further comprise a second transparent organic film formed on the transparent inorganic film of the storage phosphor panel. In that case the second transparent organic film (preferably again a parylene film, but not limited thereto) formed on the transparent inorganic polysilazane or polysiloxazane film may prevent the transparent inorganic film from peeling, more particularly if, apart from the polysilazane or polysiloxazane, inorganic particles are present as e.g. selected from the group consisting of $SiO_2$, $Al_2O_3$, $TiO_2$, $In_2O_3$, $SnO_2$, MgO, SiN, $MgF_2$, LiF, $CaF_2$, and SiNO.

As the first transparent organic film, preferably having the same composition as the optionally present intermediate layer may cover the whole substrate after having been, in a preferred embodiment as for parylene, vapour-deposited, an excellent protection of the storage phosphor layer from moisture is provided.

The present invention will become more fully understood from the further detailed description given hereinafter which is given by way of illustration only, and thus are not to be considered as limiting the present invention.

Further scope of applicability of the present invention will become apparent to those skilled in the art from the description given hereinbefore and from the further description hereinafter, but it should be understood that specific descriptions, while indicating preferred embodiments of the invention, are given by way of illustration only, since various

changes and modifications within the spirit and scope of the invention.

One surface of a substrate made of aluminum in the storage phosphor panel is preferably formed with a storage phosphor having a columnar structure adapted to convert incident radiation into visible light. Eu-doped CsBr is therefor preferably used in that layer.
All surfaces of the storage phosphor formed on the said aluminum substrate, together with the substrate itself, are covered with a first poly-paraxylylene film (first transparent organic film), whereas the surface of first polyparaxylylene film on the phosphor layer side is formed with polysiloxazane film (transparent inorganic film).

The radiation image sensor, on the other hand, has a structure in which an imaging device is attached to the storage phosphor panel on the storage phosphor.

Preferred steps of making the storage phosphor panel proceed as follows: on one surface of the aluminum substrate (having a thickness of 1.0 mm), columnar crystals of CsBr doped with Eu are grown by vapour deposition method, in order to form the storage phosphor layer. CsBr:Eu forming the storage phosphor layer is high in moisture absorbency so that it will deliquesce by absorbing vapour in the air if exposed to it without protection. In order to prevent the moisture-sensitive layer from desintegration, the first poly-paraxylylene film is formed by chemical vapour deposition (CDV) technique. Therefor the aluminum substrate whereupon the needle-shaped phosphor has been deposited before, is put into a CVD apparatus, and the first polyparaxylylene film is formed in order to get a thickness of 10 μm. As a consequence, the first polyparaxylylene film is formed over all surfaces of the stimulable needle-shaped phosphor layer and aluminum substrate (at its side, free from columnar needle-shaped phosphor). Since the tip portion of the columnar needle-shaped storage phosphor is uneven, the first polyparaxylylene film also acts as a flattening layer for the tip portion of the said columnar needle-shaped storage phosphor layer.

Subsequently a polysiloxazane film is formed with a thickness of about 10 μm by spraying on the first poly-paraxylylene film on the storage phosphor side. Since it is an object for the polysiloxazane film to improve the scratch resistance of the storage phosphor layer, it is formed in an area covering the storage phosphor layer. When this step is performed, the manufacturing of the storage phosphor is completed.

The radiation image sensor is further manufactured by attachment of e.g. a CCD as the imaging device at the side of the storage phosphor layer side of the phosphor panel.

It is clear that, although a substrate made of aluminum has been used as a substrate in the above-mentioned preferred embodiment, any substrate may be used as long as it has a favourable X-ray transmissivity, whereby substrates made of amorphous carbon (a-C), substrates made of graphite carbon, substrates made of Be, substrates made of SiC, and the like may also be used.

Further although the polysiloxazane film is formed on the surface of first poly-paraxylylene film on the storage phosphor side in the above-mentioned embodiment, it is advantageously formed not only at the said surface side of the storage phosphor panel, but also over the whole surface of the first poly-paraxylylene film.

In the above-mentioned embodiments, poly-paraxylylene used as preferred organic film layer according to the present invention, not only encompasses poly-paraxylylene but also poly-monochloroparaxylylene, poly-dichloroparaxylylene, poly-tetrachloroparaxylylene, poly-fluoroparaxylylene, poly-dimethylparaxylylene, and poly-diethylparaxylylene, without being limited thereto.

According to the present invention a method comprising an additional step of forming a third transparent film layer is set forth, wherein said third transparent film layer is a polymeric film covering said second transparent film layer. Moreover in a further embodiment of the present invention, in order to get thicker topcoat layers, said third transparent film layer is a polymeric film layer containing polymers selected from the group consisting of silazane and siloxazane type polymers, mixtures thereof and mixtures of said silazane or siloxazane type polymers with compatible film-forming polymers.

Since the storage phosphor panel of the present invention has a transparent inorganic film formed on the first transparent organic film covering over the storage phosphor panel, the moisture resistance of the storage phosphor layer can remarkably be improved by coating one or more transparent inorganic film thereupon.

In the case wherein an outermost organic film is further formed on the transparent inorganic film layer or layers, this transparent organic film may prevent the transparent inorganic film from peeling after frequent use.

While the present invention will hereinafter be described in the examples in connection with preferred embodiments thereof, it will be understood that it is not intended to limit the invention to those embodiments.

## EXAMPLES

### Preparation of the phosphor screens

CsBr:Eu phosphor screen layers were coated by thermal vapour deposition of CsBr and EuOBr.
Therefore CsBr was mixed with EuOBr and placed in a container in a vacuum deposition chamber. The phosphor was deposited on an aluminum substrate having a thickness of 1.5 mm and a circular diameter of 40 mm.

The distance between the container and the substrate was 10 cm. During vapour deposition the substrate was rotated at a velocity of 12 rpm.
Before starting evaporation, the chamber was evacuated to a pressure of $4.10^{-5}$ mbar. During the evaporation process Ar was introduced as an inert gas in the chamber.

Several screens were produced in order to provide a test material suitable for test with several differing protective coating application techniques.

Parylene C was applied on a phosphor screen by a low-temperature, low-pressure application technique. The dimer chloro-di-para-xylylene was evaporated at 150°C and broken down to the monomer at 690°C. The monomer vapour was guided to the vapour deposition chamber where polymerisation took place on the phosphor screen surface.

Samples were covered with a coating of 10 μm thickness.

A solution is made of 20 g of the polysilazane Kion VL20 of Kion Corporation, Columbus, Ohio USA, in a solvent mixture of 30 g of toluene and 30 g of methylethylketone. Hereto, 10 g of a 30 wt% solution of polymethymethacrylate-co-butylmethacrylate is added. As a thermal initiator, 5 g of tertiair-butylperoxy-2-ethylhexyl-carbonate was mixed into the solution, becoming a clear, colorless solution. The solution was applied by means of dipcoating onto the phosphor screen with a parylene-layer, and cured for 20 hours in a drying oven at 90°C. The cured polysilazane-acrylate coating with high abrasion resistivity, was a clear, transparent and colorless layer (coating A) having a thickness of about 10 μm.

In a second application (coating B), 2 g of a polysilazane was dissolved in 10 g of toluene. Hereto, 2 g of a 20 wt% solution of dimethyl-2,2-azobis(2-methylpropionate) was added dropwize under strong homogenisation. After 30 minutes of stirring, the solution was applied by means of bar-coating onto the phosphor screen with a parylene-layer, and cured for 1 hour at 120°C.

The cured coating combined high abrasion resistivity with elasticity and transparency.

For coating C, a polysilazane solution was made by dissolving 20 g in 20 g of methylethylketone. Hereto, 20 g of Servocure RT184 of Servo, The Netherlands, was added, together with 20 g of Ebecryl 1290 by UCB Radcure, Belgium. The solution was homogenised by stirring during 2 hours. Then, 4 g of Darocur 1173 by Ciba, Germany, was added. The lacquer was applied by means of sieve printing and cured with strong UVA-light with an intensity of at least 200 mW/$cm^2$.

In another application (coating D), a solution of polysiloxazane and urethane acrylates was sprayed onto the phosphor screen with a parylene-coat and cured under the influence of atmospheric moisture at 60°C during 20 hours, in order to become a 6 μm abrasion-resistant, clear, elastic, non-brittle layer.

The applied polymeric solution was a mixture of 7.5 g of poly(oxy-1,2-ethanediyl-hydro-(1-oxo-2-propenyloxy))-ether, 2.5 g of 2-ethyl-2(hydroxymethyl)-1,3-propanediol, 5 g of hexanedioldiacrylate, 15 g of a hexafunctional urethane-acrylate-oligomer and 60 g of Kion ML33/C33 by Kion Corporation, Columbus, USA, dissolved in 400 g of methylethylketone and 300 g of methoxypropanol.

In order to avoid cracks and irregularities due to shrinkage during curing when applying thick coatings, it is recommended to provide said thicker coatings by application of multilayers (double or even triple coatings of polysilazane precursor solutions).

The abrasion resistance of the applied coatings was evaluated with a Teledyne Taber 5130 Abraser with Calibrase CS10F elements, sandpaper P220 and a load of 250 g on each element, as described in ASTM D1044. Loss of layer mass was measured after 100 cycles.

For evaluating the resistance against atmospheric humidity, the samples were stored in a desiccator with a defined atmosphere of 87 % relative humidity at 25°C for one week. The gravimetric water absorption (expressed in mg) was observed with respect to the surface area (expressed in $cm^2$). Results of both tests for screens having the compositions as indicated have been summarised in Table 1 hereinafter.

Table 1

| Coating | ASTM D1044 test Mass loss | Water Absorption at 87% RH / 25 °C |
|---|---|---|
| No coating onto the phosphor needle layer | > 20 mg | total deterioration after less than 12 hrs |
| Parylene C layer 8 μm | 10 mg | 0.40 mg/$cm^2$ |
| Parylene C + coating A | 3.0 mg | 0.20 mg/$cm^2$ |
| Parylene C + coating B | 1.5 mg | 0.15 mg/$cm^2$ |
| Parylene C + coating C | 0.2 mg | 0.10 mg/$cm^2$ |
| Parylene C + coating D | 0.5 mg | 0.10 mg/$cm^2$ |

It has thus clearly been shown that, making use of a Teledyne Taber 5130 Abraser and with Calibrase CS10F

elements, sandpaper P220 and a load of 250 g on each element as described in ASTM D1044, a mass loss of the surface layer of the screen of the present invention of not more than 3 mg is found, when measured after 100 cycles, and a water absorption of not more than 0.20 mg/cm$^2$.

These results are clearly indicative for the effectiveness of wear (scratch) and moisture resistance of the protective layer combination applied to the binderless phosphor screen according to the present invention.

Manufacturing storage phosphor screens or panels and providing an excellent protection against moisture, both at the top side and at the edges of the phosphor screen or panel in a radiation detector has thus been shown to be attainable.

Having described in detail preferred embodiments of the current invention, it will now be apparent to those skilled in the art that numerous modifications can be made therein without departing from the scope of the invention as defined in the appending claims.

## Claims

**1.** A stimulable phosphor screen comprising

- a radiation-transparent substrate;
- a stimulable phosphor layer formed on said substrate;
- a first transparent organic film covering said stimulable phosphor layer; and
- a second transparent film formed on said first transparent organic film,

**characterised in that** said second transparent film is a polymeric film containing polymers selected from the group consisting of silazane and siloxazane type polymers, mixtures thereof and mixtures of said silazane or siloxazane type polymers with compatible film-forming polymers.

**2.** A stimulable phosphor screen according to claim 1, further comprising an intermediate transparent organic film between said substrate and said stimulable phosphor layer.

**3.** A stimulable phosphor screen according to claim 1 or 2, wherein said organic film is a poly-paraxylylene film.

**4.** A stimulable phoshor screen according to any one of the claims 1 to 3, wherein said substrate is an aluminum or an amorphous carbon (a-C) substrate.

**5.** A stimulable phoshor screen according to any one of the claims 1 to 4, wherein said storage phosphor is a binderless needle-shaped, vapour-deposited CsBr:Eu phosphor.

**6.** A radiation image sensor comprising a stimulable phosphor screen according to any one of the claims 1 to 5, and an imaging device disposed in order to face said stimulable phosphor screen.

**7.** A radiation image sensor according to claim 6, wherein said imaging device is a CCD.

**8.** A method of preparing a stimulable phosphor screen or panel according to any one of the claims 1 to 5, said method comprising the steps of:

- forming a stimulable phosphor layer on a radiation-transparent substrate;
- forming a first transparent organic film covering said needle-shaped stimulable phosphor layer; and
- forming a second transparent film formed on said first transparent organic film, wherein said second transparent film is a polymeric film containing polymers selected from the group consisting of silazane and siloxazane type polymers, mixtures thereof and mixtures of said silazane or siloxazane type polymers with compatible film-forming polymers; and wherein said organic film is a polyparaxylylene film.

**9.** A method according to claim 8, said method comprising an additional step of forming a third transparent film layer, wherein said third transparent film layer is a polymeric film covering said second transparent film layer.

**10.** A method according to claim 9, wherein said third transparent film layer is a polymeric film layer containing polymers selected from the group consisting of silazane and siloxazane type polymers, mixtures thereof and mixtures of said silazane or siloxazane type polymers with compatible film-forming polymers.

## Patentansprüche

1. Eine ausleuchtbare Speicherfolie, enthaltend :

   - ein strahlungsdurchlässiges Substrat,
   - eine auf dem Substrat gebildete ausleuchtbare Leuchtstoffschicht,
   - einen ersten lichtdurchlässigen organischen Film, der die ausleuchtbare Leuchtstoffschicht bedeckt,
   - einen zweiten lichtdurchlässigen, auf dem ersten lichtdurchlässigen organischen Film gebildeten Film,

   **dadurch gekennzeichnet, dass** der zweite lichtdurchlässige Film ein polymerer Film ist, der Polymere aus der Gruppe bestehend aus Polymeren des Silazan-Typs und Siloxazan-Typs, Gemischen derselben und Gemischen aus den Polymeren des Silazan-Typs oder Siloxazan-Typs mit vereinbaren filmbildenden Polymeren enthält.

2. Ausleuchtbare Speicherfolie nach Anspruch 1, die ferner einen lichtdurchlässigen organischen Zwischenfilm zwischen dem Substrat und der ausleuchtbaren Speicherfolie enthält.

3. Ausleuchtbare Speicherfolie nach Anspruch 1 oder 2, **dadurch gekennzeichnet, dass** der organische Film ein Polyparaxylylenfilm ist.

4. Ausleuchtbare Speicherfolie nach einem der Ansprüche 1 bis 3, **dadurch gekennzeichnet, dass** das Substrat ein Aluminiumsubstrat oder ein Substrat aus amorfem Kohlenstoff (a-C) ist.

5. Ausleuchtbare Speicherfolie nach einem der Ansprüche 1 bis 4, **dadurch gekennzeichnet, dass** der Speicherleuchtstoff ein bindemittelfreier, nadelförmiger, aufgedampfter CsBr:Eu-Leuchtstoff ist.

6. Ein Strahlenbilddetektor, der eine ausleuchtbare Speicherfolie nach einem der Ansprüche 1 bis 5 und eine der ausleuchtbaren Speicherfolie zugewandt angeordnete Bildgebungsvorrichtung enthalt.

7. Strahlenbilddetektor nach Anspruch 6, **dadurch gekennzeichnet, dass** die Bildgebungsvorrichtung ein ladunggekoppeltes Element (CCD) ist.

8. Ein durch die nachstehenden Schritte **gekennzeichnet**es Verfahren zur Herstellung einer ausleuchtbaren Speicherfolie nach einem der Ansprüche 1 bis 5 :

   - Bildung einer ausleuchtbaren Leuchtstoffschicht auf einem strahlungsdurchlässigen Substrat,
   - Bildung eines ersten lichtdurchlässigen organischen, die Schicht aus nadelförmigem ausleuchtbarem Leuchtstoff bedeckenden Films und
   - Bildung eines zweiten lichtdurchlässigen Films auf dem ersten lichtdurchlässigen organischen Film, wobei der zweite lichtdurchlässige Film ein polymerer Film ist, der Polymere aus der Gruppe bestehend aus Polymeren des Silazan- und Siloxazan-Typs, Gemischen derselben und Gemischen aus Polymeren des Silazan- und Siloxazan-Typs mit vereinbaren filmbildenden Polymeren enthält, und der organische Film ein Polyparaxylylenfilm ist.

9. Verfahren nach Anspruch 8, **dadurch gekennzeichnet, dass** das Verfahren einen zusätzlichen Schritt zur Bildung einer dritten lichtdurchlässigen Filmschicht umfasst, wobei die dritte lichtdurchlässige Filmschicht ein die zweite lichtdurchlässige Filmschicht bedeckender polymerer Film ist.

10. Verfahren nach Anspruch 9, **dadurch gekennzeichnet, dass** die dritte lichtdurchlässige Filmschicht eine polymere Filmschicht ist, die Polymere aus der Gruppe bestehend aus Polymeren des Silazan- und Siloxazan-Typs, Gemischen derselben und Gemischen aus Polymeren des Silazan- und Siloxazan-Typs mit vereinbaren filmbildenden Polymeren enthält.

## Revendications

1. Écran contenant un luminophore stimulable, comprenant

   - un substrat transparent au rayonnement ;

- une couche contenant un luminophore stimulable formée sur ledit substrat ;
- un premier film organique transparent recouvrant ladite couche contenant un luminophore stimulable ; et un deuxième film transparent fourni sur ledit premier film organique transparent ;

**caractérisé en ce que** ledit deuxième film transparent est un film polymère contenant des polymères choisis parmi le groupe constitué par des polymères du type du silazane et du type du siloxazane, par des mélanges desdits polymères et par des mélanges desdits polymères du type du silazane ou du type du siloxazane avec des polymères filmogènes compatibles.

**2.** Écran contenant un luminophore stimulable selon la revendication 1, comprenant en outre un film organique transparent intermédiaire entre ledit substrat et ladite couche contenant un luminophore stimulable.

**3.** Écran contenant un luminophore stimulable selon la revendication 1 ou 2, dans lequel ledit film organique est un film des poly-paraxylylène.

**4.** Écran contenant un luminophore stimulable selon l'une quelconque des revendications 1 à 3, dans lequel ledit substrat est un substrat à base d'aluminium ou un substrat à base de carbone amorphe (a-C).

**5.** Écran contenant un luminophore stimulable selon l'une quelconque des revendications 1 à 4, dans lequel ledit luminophore de stockage est un luminophore CsBr:Eu exempt de liant, de configuration aciculaire, déposé en phase vapeur.

**6.** Capteur d'image par rayonnement comprenant un écran contenant un luminophore stimulable selon l'une quelconque des revendications 1 à 5, et un dispositif de formation d'image disposé de façon à faire face audit écran contenant un luminophore stimulable.

**7.** Capteur d'image par rayonnement selon la revendication 6, dans lequel ledit dispositif de formation d'image est un CCD.

**8.** Procédé de préparation d'un écran ou d'un panneau contenant un luminophore stimulable selon l'une quelconque des revendications 1 à 5, ledit procédé comprenant les étapes consistant à :

- former une couche contenant un luminophore stimulable sur un substrat transparent au rayonnement ;
- former un premier film organique transparent recouvrant ladite couche contenant un luminophore stimulable de configuration aciculaire ; et
- former un deuxième film transparent sur ledit premier film organique transparent, ledit deuxième film transparent étant un film polymère contenant des polymères choisis parmi le groupe constitué par des polymères du type du silazane et du type du siloxazane, par des mélanges desdits polymères et par des mélanges desdits polymères du type du silazane ou du type du siloxazane avec des polymères filmogènes compatibles, et ledit film organique représentant un film de poly-paraxylylène.

**9.** Procédé selon la revendication 8, ledit procédé comprenant une étape supplémentaire de formation d'une troisième couche de film transparent, ladite troisième couche de film transparent représentant un film polymère recouvrant ladite deuxième couche de film transparent.

**10.** Procédé selon la revendication 9, dans lequel ladite troisième couche de film transparent est une couche de film polymère contenant des polymères choisis parmi le groupe constitué par des polymères du type du silazane et du type du siloxazane, par des mélanges desdits polymères et par des mélanges desdits polymères du type du silazane ou du type du siloxazane avec des polymères filmogènes compatibles.